Europäisches Patentamt

European Patent Office

Office européen des brevets

(19)

(11) Publication number: **0 085 258**

**A1**

# (12) EUROPEAN PATENT APPLICATION

(21) Application number: 82306977.8

(22) Date of filing: 24.12.82

(51) Int. Cl.³: **F 02 B 23/08**

(30) Priority: 21.01.82 GB 8201730

(43) Date of publication of application:
10.08.83 Bulletin 83/32

(84) Designated Contracting States:
DE FR IT

(71) Applicant: RICARDO CONSULTING ENGINEERS
PUBLIC LIMITED COMPANY
Bridge Works Shoreham-by-Sea
West Sussex BN4 5FG(GB)

(72) Inventor: Overington, Martin Thomas
Bay Trees Durrington Hill
Worthing Sussex BN1 2PX(GB)

(74) Representative: Jennings, Nigel Robin et al,
KILBURN & STRODE 30 John Street
London WC1N 2DD(GB)

(54) Combustion chamber arrangements in internal-combustion engines.

(57) An internal combustion engine of the spark-ignited piston type has a piston crown of "pent-roof" shape and a cylinder head combustion chamber of corresponding shape. Formed on one inclined face [22] of the combustion chamber [20] is a recess [30] of generally ovate profile, having a plane roof [32] parallel to the face [22] and having a side wall [31] perpendicular thereto. The exhaust valve port [29] opens through one end of the roof of the recess [30] and the spark plug [37] protrudes through the other end. During the compression stroke as the piston [12] approaches top-dead-centre, gas is displaced by the "squish" effect from between the approaching inclined faces [16] and [21] of the piston crown and combustion chamber roof on one side of the apex [18,] [23] and travels across the combustion chamber and into the recess [30] in the other side of the roof thus producing gas movement and turbulence in the recess [30] where ignition takes place.

FIG. 1.

0085258

## COMBUSTION CHAMBER ARRANGEMENTS IN I.C. ENGINES

This invention relates to spark-ignited reciprocating-piston i.c. engines employing gasolene or other volatile hydrocarbon liquid as fuel, and is applicable both to fuel-injection engines and to carburettor engines, and both to engines with supercharging and to engines with normal induced aspiration.

To obtain the highest possible output from an i.c. engine it is essential to obtain the highest possible volumetric efficiency and breathing capacity, up to the highest practicable operating speed. This requires the use of large valve sizes or areas. At the same time, modern engines are required to have good fuel economy and low exhaust gas emission levels of unburnt hydrocarbons, carbon monoxide and nitrogen oxides. This demands the use of as high a compression ratio as possible with regard to the octane number of the fuel being used, in the interest of high thermal efficiency.

The shape and arrangement of the combustion chamber and valve ports associated with each cylinder of the engine is of decisive importance in connection with these and other desiderata. The detailed layout of the combustion chamber must be as compact as is practicable, and disposed in such a way that a high swirl and/or "squish" can be obtained, so as to create a relatively high gas turbulence to assist combustion particularly when operating at high air/fuel ratios (weak mixtures), in the interest of low $NO_x$ exhaust emissions and good fuel economy.

The present invention is concerned with providing certain novel combustion chamber configurations which will make possible improved results in some or all of these respects.

The invention in its widest concept comprises a spark-ignited piston engine, having a piston crown and cylinder head combustion chamber configuration in which as the piston approaches top-dead-centre during its compression stroke, gaseous charge is displaced across the combustion chamber by a "squish" effect from between approaching opposed faces of the piston crown and combustion chamber roof, respectively, on one side of the chamber into an open recess formed in the roof of the combustion chamber on the other side thereof, the spark ignition taking place in the recess.

The term "squish" is a known term in the art, which is used to refer to the displacement of a flow of gaseous charge from between opposed surfaces of the piston and cylinder head which approach one another very closely as the piston approaches its top-dead-centre position during its compression stroke, the displaced gas flow being directed into another part of the combustion chamber to create movement and turbulence of the air/fuel mixture which will assist combustion and improve emissions.

From another aspect, the invention comprises a spark-ignited i.c. engine having a cylinder with a piston whose crown has an upper surface formed by two oppositely-inclined faces which intersect or merge at a level above that of the periphery of the crown, and having a cylinder head formed in its lower surface with a re-entrant combustion chamber whose lower side is a circular opening in the cylinder head coaxial with the cylinder and of substantially the same diameter, and whose overall internal shape (apart from the below-mentioned recess) generally corresponds to the external shape of the piston crown, and whose roof is defined _____

by two oppositely-inclined faces, corresponding to and opposed to those of the piston crown, which faces intersect or merge at a level above that of the lower side of the cylinder head, the engine inlet valve port or ports entering the combustion chamber through one of the said faces of the combustion chamber roof, and there being formed in the other face an open recess into which the engine exhaust valve port or ports and a spark plug aperture both open, and in which as in use the piston approaches the top-dead-centre position during its compression stroke its crown enters the combustion chamber and the oppositely-inclined faces of the piston crown closely approach the opposed faces of the combustion chamber roof so that compressed gaseous charge will be displaced laterally from between the face of the combustion chamber roof containing the inlet port(s) and the opposed face of the piston crown by the "squish" effect in a flow which will enter the recess in the other face of the combustion chamber.

It is to be understood that terms such as "upper", "lower", "above", "below", and the like are used herein to relate to the condition when the engine is orientated with the respective cylinder axis vertical, the mating face of the cylinder head horizontal, and the cylinder head disposed at the upper end of the cylinder with the crankshaft at the lower end thereof, so that the piston reciprocates vertically up and down. However such terms are not to be interpreted as limiting the invention to this orientation in any way, since of course the engine may be mounted and operated in any practicable orientation.

In a convenient arrangement, the oppositely-inclined faces of the piston crown and of the roof of the combustion chamber may be plane, and may respectively intersect along parallel straight lines which are perpendicular to the axis of the cylinder, the opposed faces of the piston crown and combustion chamber roof being parallel. The inclined faces of the roof of the combustion chamber may be inclined at either equal or unequal angles to the cylinder axis, in a symmetrical or asymmetrical arrangement.

The recess in the combustion chamber roof is preferably elongate, to accommodate a single exhaust valve port and a spark plug aperture spaced along its major axis. It may have a plane roof, preferably parallel to the inclined face of the combustion chamber in which it is formed. It may have its entire side wall disposed perpendicularly to that face, and in a preferred arrangement its intersection with that face may have a generally ovate profile.

It will be understood that as the piston approaches the top-dead-centre position during the latter part of its compression stroke, air or fuel/air mixture located between the inclined face of the combustion chamber roof which contains the inlet valve(s) and the opposed face of the piston crown wall will be squeezed by the rising piston between these faces and will be displaced by the well-known "squish" effect in a laterally-moving flow out from between these approaching faces and across the combustion chamber, ·and this flow of displaced gas will enter the recess in the other inclined face of the chamber to set up gas movement and turbulence therein below the exhaust valve and in the vicinity of the spark plug electrodes, with beneficial effects upon ignition and combustion.

Should it be required to alter the angle at which the "squish" gas flow enters and/or travels within the recess, to an angle more parallel to the inclined face of the cylinder head in which the recess is formed, various modifications of the combustion chamber or piston crown may be made.

One such modification is a lip formed along the edge of the recess in the combustion chamber roof nearest to the junction of the inclined faces of the roof, the lip being immediately adjacent to the face containing the recess and projecting into the interior of the recess as an overhang to deflect the "squish" flow downwardly.

Another modification for the same purpose is an open groove formed in the face of the combustion chamber roof which contains the recess, the groove extending close to and along the length of the edge of the recess nearest to the junction of the oppositely-inclined faces.

The invention may be carried into effect in various ways, but certain specific embodiments thereof will now be described by way of example only and with reference to the accompanying drawings, in which:-

Figure 1 is a view, in section on the line A-A in Figure 5, showing the upper part of one cylinder and the cylinder head of a piston engine, which may be either a single-cylinder engine or a multi-cylinder engine.

Figure 2 is a view on the arrow X in Figure 1 showing part of the roof of the combustion chamber from below,

Figure 3 is a view in section on the line D-D in Figure 1 through the axes of the inlet valves,

Figure 4 is a view in section on the line E-E of Figure 1 through the exhaust valve axis,

Figure 5 is a sectional plan taken on the line C-C in Figure 1, in the case of the single cylinder head,

Figure 6 is a sectional elevation on the line B-B in Figure 5 through the axis of the spark plug,

Figure 7 is a sectional elevation on the line F-F in Figure 1, in a plane of section through the cylinder axis,

Figure 8 is a sectional plan similar to Figure 5 showing a first modification of the arrangement of Figures 1 to 7,

Figure 9 is a section on the line B-B of Figure 8, similar to Figure 6,

Figure 10 is a view similar to Figure 8 showing a second modification of the arrangement of Figures 1 to 7,

Figure 11 is a section on the line B-B of Figure 10, similar to Figure 6,

Figure 12 is a diagrammatic elevation of another embodiment in which the inlet and exhuast valve stem axes are equally and oppositely inclined to the cylinder axis but the junction line at the apex of the combustion chamber roof is offset from the cylinder axis, and

Figure 13 is a view similar to Figure 12 of another asymmetrical embodiment in which the valve stem axes are unequally inclined to the cylinder axis.

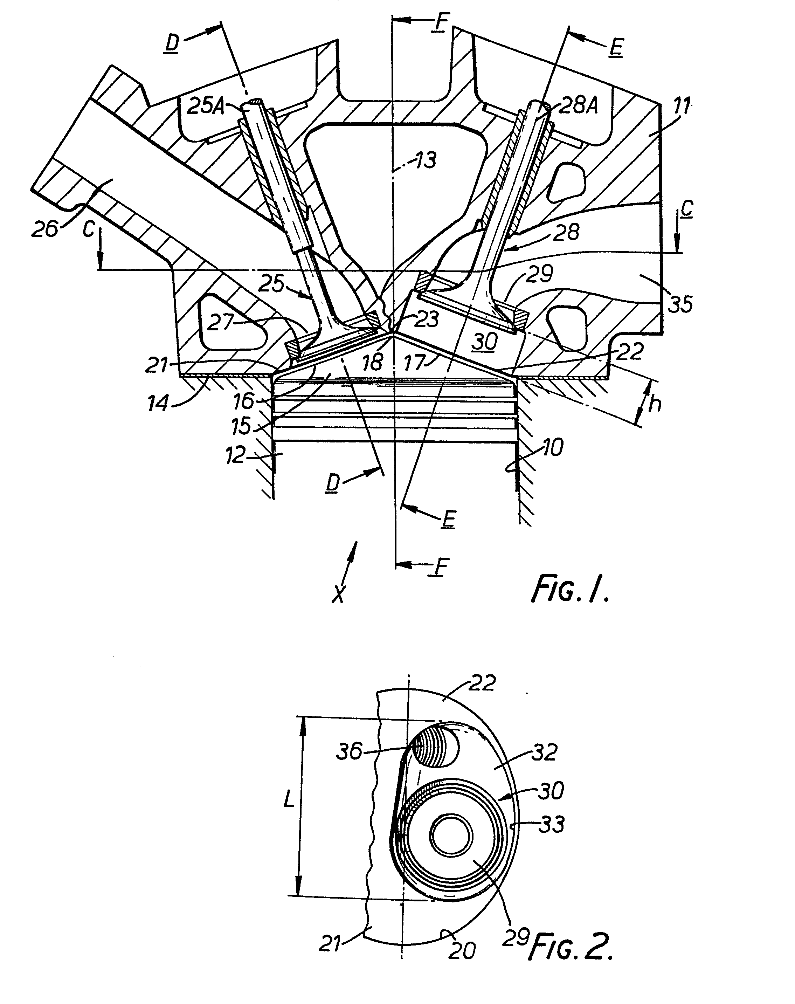

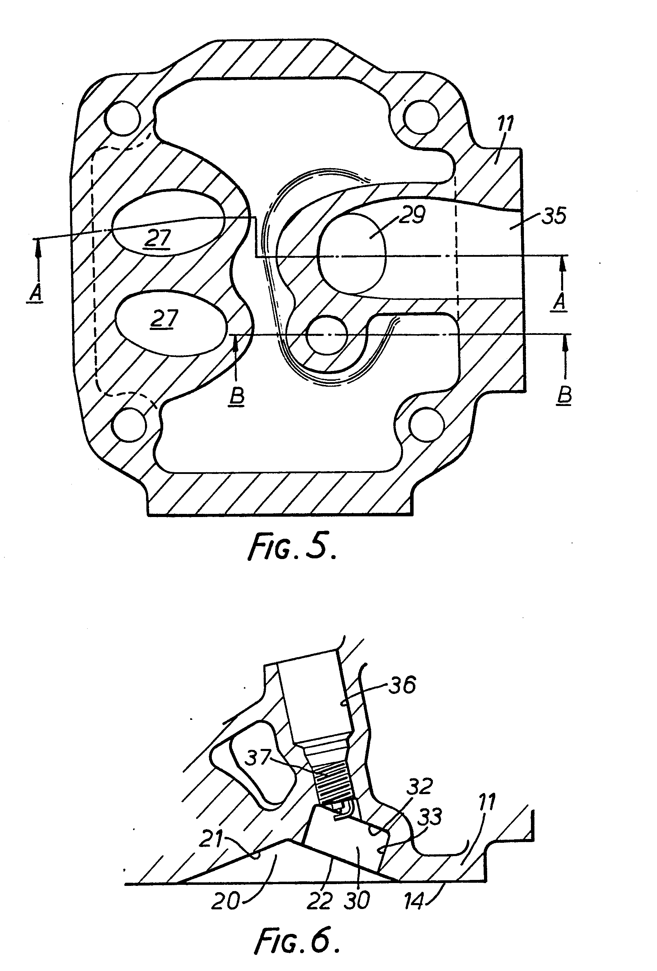

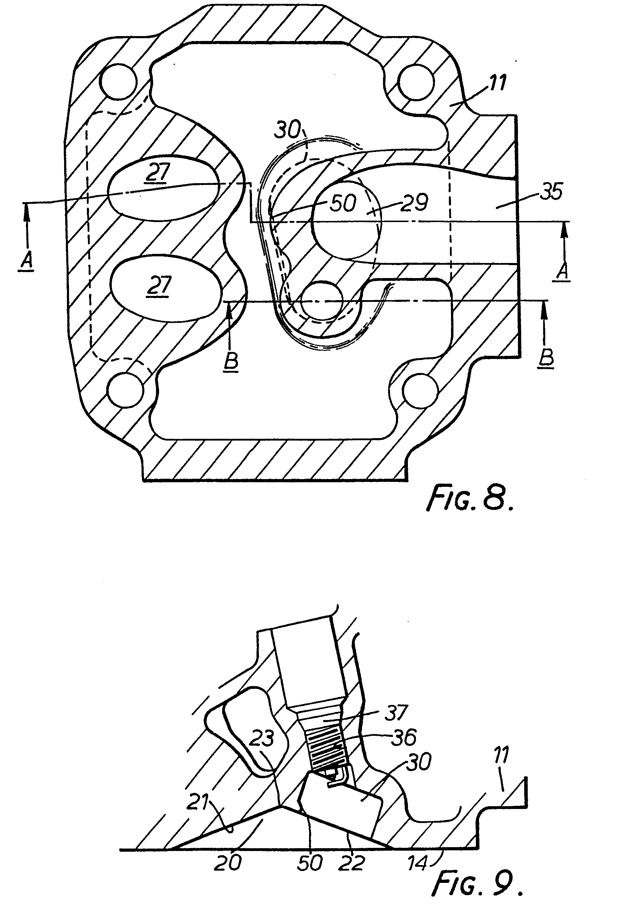

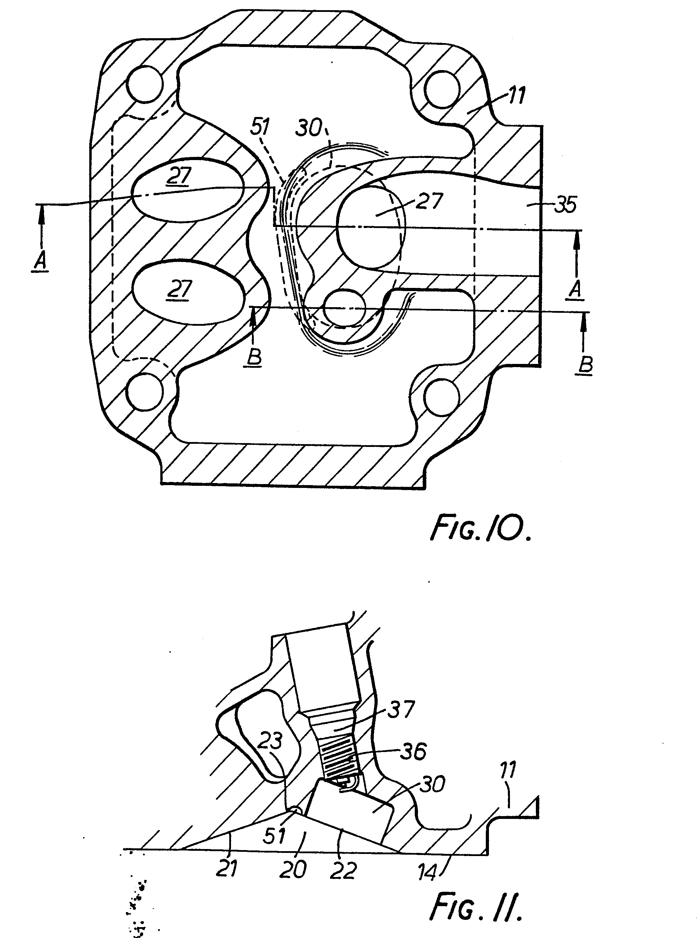

Figures 1 to 7 show the upper part of the bore of the, or one, cylinder 10 and the cylinder head 11 of a single-cylinder or of a multi-cylinder spark-ignited gasolene engine of piston type, the respective piston being shown in part at 12. Figure 5 shows the single-cylinder version, but in the case of a multi-cylinder head Figure 5 would be amended simply by the removal of the closure metal at the top and bottom of the Figure as drawn, and the extension of the left and right-hand faces with appropriate ports to suit the number of cylinders involved. Similar remarks apply to Figures 8 and 10.

The axis 13 of the cylinder 10 is shown as vertical in Figures 1 to 7 with the lower face 14 of the cylinder head 11 horizontal. The piston crown 15 projects upwardly, having a known "pent roof" form, its upper surface being defined by two plane faces 16 and 17 which intersect in a horizontal apex line 18 passing diametrally through the axis of the piston at the top of the crown. The two plane surfaces 16 and 17 are downwardly-inclined from the apex line 18 at equal and opposite acute angles, subtending between themselves an included angle less than 180$^{\circ}$. The side surfaces of the piston crown which intersect the oppositely-inclined plane faces on either side of the piston are part-cylindrical.

The underside of the cylinder head 11 is formed, for the or each cylinder 10, with a circular-profiled re-entrant recess 20, coaxial with the cylinder bore, which recess constitutes a main part of the combustion chamber for that cylinder at top-dead-centre, and whose interior has a shape which generally matches that of the piston crown so that the latter can enter the combustion chamber into close proximity with most of its roof as the piston moves to its top-dead-centre position. Thus the roof of the combustion chamber is also formed by two downwardly-inclined plane faces 21 and 22 which extend parallel to the respective faces 16 and 17 and intersect at an apex line 23 which is parallel to and just above the apex line 18. At top-dead-centre the plane faces 16 and 17 of the piston crown lie very close to the opposed plane faces 21 and 22 of the cylinder head combustion chamber.

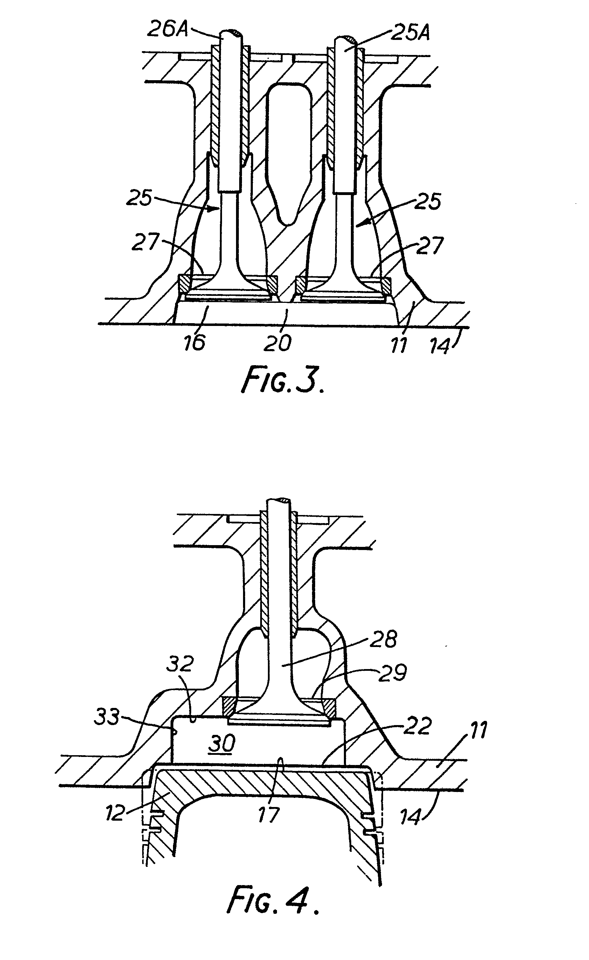

The cylinder head has poppet-type inlet and exhaust valves 25 and 28, and the axes of the valve stems 25A and 26A are perpendicular to the respective plane faces 21 and 22. The cylinder head has twin inlet valves 25 per cylinder as shown in Figure 3, whose valve seatings surround circular apertures formed side by side in the inclined face 21 of the combustion chamber recess 20. The two ducts 26 of the inlet valve ports 27 are cast in the cylinder head as shown in Figures 1 and 5. A single exhaust valve 28 is used per cylinder, and its exhaust port 29 opens into a recess 30 formed in the cylinder head 11 with its bottom opening through the other plane face 22 of the combustion chamber, the profile of its intersection with that face being generally ovate as shown at 31 in Figure 2. The recess 30 has a plane roof 32 which lies parallel to the face 22, and has a circumferential side wall 33 generated by straight lines perpendicular to the roof 32 and face 22. The major axis of the elongate recess 30 extends generally parallel to the apex line 23, as shown in Figure 2. The exhaust valve port 29 opens into the larger end of the roof of the ovate recess 30, as shown in Figure 2, and its exhaust duct 35 formed in the cylinder head casting extends away from the port 29 as shown in Figures 1 and 5. A tapped bore 36 in the cylinder head for a spark plug 37 opens into the smaller end of the roof of the ovate recess 30, as shown in Figures 2 and 6, so that the electrodes of the spark plug 37 lie approximately at the level of the roof 32.

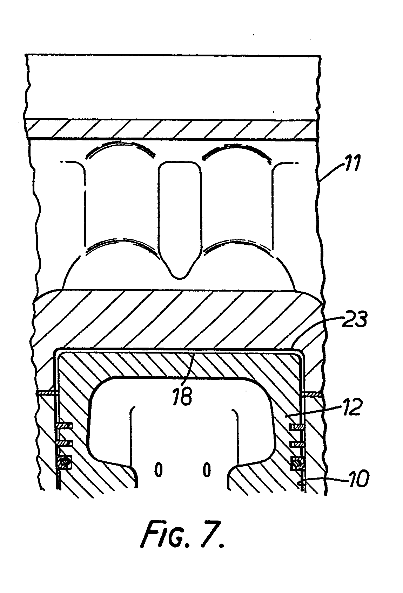

It will be appreciated that, as indicated by Figure 7, the cylinder head recess 20 and the crown of the piston 12 are planar in sections at right angles to Figure 1, so defining the plane inclined faces 21, 22 and 16, 17. The twin inlet valves 25, which are used to give good breathing at high speeds, are inclined to the cylinder axis at the same angle as but oppositely to the single exhaust valve 28, whose port 29 has a larger diameter than the twin inlet ports 27. The axes of the inlet and exhaust valves are perpendicular to the respective faces 21 and 22, and are inclined at $30^{\circ}$ or less to the cylinder axis. The valves are operated by means of twin overhead camshafts, not shown. However, with some relocation of the spark plug bore 36, a single central overhead camshaft with fingers or rockers to transmit the cam lifts to the valves could alternatively be employed. The inlet ducts 26 of the two inlet valves are separate but diverge from the two closely adjacent circular-section entry holes at the cylinder head entry face, so that a single elongate inlet manifold branch can feed these two entries for the or each cylinder. It is possible to have a single entry at the cylinder head entry face, with the bifurcation of the two inlet ports taking place within the head structure if required.

If the height of the recess 30 in the plane face 22 of the combustion chamber is $h$, measured perpendicularly from the face 22 to the roof 32, and being of necessity at least equal to the exhaust valve lift plus the valve head disc thickness, and if the internal length of the recess 30 along its longer axis is L, then the ratio L:h should be within the range 2.7:1 to 4.3:1.

It is important that the detailed motion of the gaseous air/fuel mixture induced into the combustion chamber through the inlet valves, and there compressed by the piston, should at around top-dead-centre be suitably controlled to facilitate orderly and rapid combustion when a spark occurs at the points of the spark plug, whose energisation is provided for and timed in any orthodox manner. An important factor for obtaining the required charge movement and turbulence is the so-called "squish" previously referred to, namely the gas motion which occurs transversely at one edge of the main combustion space as air or air/fuel mixture is compressed within the cylinder between the approaching faces of the piston crown and the combustion chamber in the head, due to the very small vertical clearance between the piston crown and the roof of the combustion chamber which with good production tolerances can be as low as 1% of the piston stroke. In the illustrated construction, the gas is displaced, as the piston rises, from the left hand side of the combustion space as shown in Figure 1, i.e. from between the opposed faces 16 and 21 and under the inlet valves, and will tend to be projected towards the right in that Figure, into the clearance volume provided under the exhaust valve within the recess 30. The precise orientation of the "squish" gas projection into the recess 30 depends on the geometry, and should be optimised by trial and error to provide good combustion over a wide range of mixture strengths.

If it is required to alter the direction at which "squish" gas is projected from between the faces 16 and 21 into the combustion chamber 30, to a smaller angle with respect to the faces 17 and 22, various expedients are possible.

One such expedient is shown in Figures 8 and 9, in which an integral lip 50 is formed along the edge of the recess 30 nearest to the apex line 23, the lip being located next to the inclined face 22 and projecting laterally into the recess 30. In Figure 8 the ovate broken line 30 shows the outline of the bottom of the recess 30 whilst the inner broken line 50 shows the position of the edge of the lip 50. The lip 50 will have the effect of deflecting the "squish" gas flow to a shallower angle. The lip must have a reasonably substantial section to avoid overheating with the risk of causing pre-ignition.

Another such expedient is shown in Figures 10 and 11, in which a groove is cast or machined in the inclined face 22 next to the apex line 23 and between it and the adjacent edge of the recess 30. In Figure 10 the ovate broken line 20 shows the outline of the bottom of the recess 30 whilst the broken loop line 51 shows the position of the groove 51, which as indicated curves around to follow the profile of the recess at each end. The groove 51 will intercept the flow of "squish" gas from between the faces 16 and 21, since the groove is virtually at the apex 23 of the cylinder head recess 20 and will cause the "squish" gas flow to be deflected downwardly.

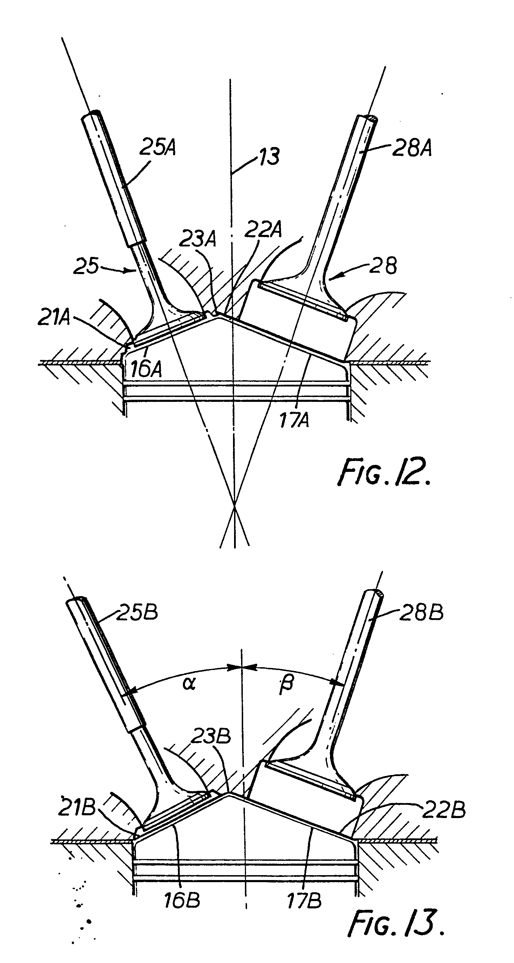

In all the embodiments so far described and illustrated the piston 12 and cylinder head combustion chamber 20 have been of the "pent-roof" form with two equally inclined flat surfaces on each, so that the apex of the piston crown and that of the circular recess 20 are both straight lines passing through the central axis 13 of the cylinder and the central axis of the piston which is treated as coincidental with the cylinder axis 13.  However this is not essential.  Figure 12 shows diagrammatically a possible embodiment in which the piston crown and the cylinder head are asymmetrical, their horizontal apex lines at the intersections of their oppositely inclined faces 16A, 17A and 21A, 22A respectively being offset from the cylinder axis 13, but the axes of the inlet valve stems 25A and the axis of the exhaust valve stem 28A are equally inclined at for example $30^{\circ}$ to the cylinder axis 13.  Thus the faces 16A and 21A are oppositely inclined to the axis 13 at the same angle, $60^{\circ}$, as the faces 17A and 22A, but meet the side wall of the piston at different levels.

In Figure 13 there is shown diagrammatically another layout in which the axes of the inlet and exhaust valve stems 25B, 28B are respectively inclined at different angles $\alpha$ and $\beta$ to the cylinder axis 13.  The inclined faces 21B and 22B are still perpendicular to the respective associated valve stem axes, but they slant from a common level at the cylinder head face 14, and intersect asymmetrically at an offset apex line 23B. The faces 16B and 17B of the piston crown are parallel to the faces 21B and 22B respectively, and are similarly arranged, i.e. asymmetrically at different inclinations.

Moreover it is not essential that the two oppositely inclined plane faces of the pentroof piston crown, and those of the combustion chamber be flat, and it is to be understood that the invention may be utilised in conjunction with variants of this basic pent-roof shape. For example each pair of oppositely-inclined faces might be nonplanar, e.g. shallow convex or concave surfaces each having a large radius of curvature about one axis or two intersecting axes, e.g. part-cylindrical or even part-spherical, these curved surfaces either intersecting at the apex or ridge of the pent-roof, or even merging smoothly into one another at the apex so as to form a shallow part-cylindrical or part-spherical domed roof for the piston and similarly for the combustion chamber. All these and other variations of the basic pentroof piston and combustion chamber shape are to be regarded as being within the scope of the invention and of the following claims.

CLAIMS

1. A spark-ignited i.c. engine having a cylinder whose combustion space is defined between opposed surfaces of the piston crown and of a combustion chamber formed in the cylinder head, an open recess (30) in which the spark ignition takes place is formed in one side (22) of the roof of the combustion chamber (20) characterised in that the said opposed surfaces (16, 17, 21, 22) are so arranged that, as the piston approaches its top-dead-centre position during its compression stroke, gaseous charge is displaced from between opposed surfaces (16, 21) of the piston crown (15) and the combustion chamber (20) on the other side of the combustion chamber across the combustion chamber (20) by a "squish" effect into the open recess (30).

2. A spark-ignited i.c. engine having a cylinder with a piston whose crown has an upper surface formed by two oppositely-inclined faces which intersect or merge at a level above that of the periphery of the crown, and having a cylinder head whose lower surface is formed with a re-entrant combustion chamber whose lower side is a circular opening in the cylinder head coaxial with the cylinder and of substantially the same diameter, and whose overall internal shape generally corresponds to the external shape of the piston crown, and whose roof is defined by two oppositely-inclined faces, corresponding to and opposed to those of the piston crown, which faces intersect or merge at a level above that of the lower side of the cylinder head, the engine inlet valve port or ports entering the combustion chamber through one of the said faces of the combustion chamber roof, characterised in that an open recess (30) is formed in the other face (22) of the combustion chamber roof into which engine exhaust valve port or ports (29) and a spark plug aperture (36) both open, and that the faces (16, 17, 21, 22) of the piston crown (15) and the combustion chamber (20) are so arranged that as, in use, the piston (12) approaches the top-dead-centre position during its compression stroke its crown (15) enters the combustion chamber (20) and the oppositely-inclined faces (16, 17) of the piston crown (15) closely approach the opposed faces (21, 22) of the combustion chamber roof so that compressed gaseous charge is displaced laterally from between the face (21) of the combustion chamber roof containing the inlet port(s) (27) and the opposed face (16) of the piston crown (15) by the "squish" effect in a flow which enters the recess (30) in the other face (22) of the combustion chamber (20).

3. An i.c. engine as claimed in Claim 2, characterised in that the oppositely-inclined faces (16, 17, 21, 22) of the piston crown (15) and of the combustion chamber roof are plane and respectively intersect along parallel straight lines (18, 23) which are perpendicular to the axis (13) of the cylinder (10), the opposed faces (16, 21; 17, 22) of the piston crown (15) and the combustion chamber roof being parallel.

4. An i.c. engine as claimed in Claim 2 or Claim 3 characterised in that the recess (30) is elongate and that the roof (32) of the recess (30) is plane.

5. An i.c. engine as claimed in any one of Claims 2 to 4, characterised in that the ratio of the length of the recess (30) to its depth in the region of the exhaust port (29) is in the range from 2.7:1 to 4.3:1.

6. An i.c. engine as claimed in Claim 3, or in Claim 4 or Claim 5 when dependent on Claim 3, characterised in that the inclined faces (21, 22) of the roof of the combustion chambers are equally and oppositely inclined to the cylinder axis (13).

7. An i.c. engine as claimed in Claim 3 characterised in that the inlcined faces (21, 22) of the roof of the combustion chamber are at unequal angles of inclination to the cylinder axis (13).

8. An i.c. engine as claimed in any one of Claims 2 to 7, characterised in that the piston crown (15) and the combustion chamber (20) both have part-cylindrical side walls extending between their peripheries and the edges of their oppositely inclined faces (16, 17, 21, 22).

9.  An i.c. engine as claimed in any one of Claims 2 to 8, characterised by a lip (50) above the edge of the recess (30) in the combustion chamber roof nearest to the junction (23) of the oppositely-inclined faces (21, 22), the lip (50) being immediately adjacent to the face (22) containing the recess (30) and projecting into the interior of the recess (30).

10.  An i.c. engine as claimed in any one of Claims 2 to 8, characterised by an open groove (51) in the inclined face (22) of the combustion chamber roof which contains the recess (30), the groove (51) extending close to and along the length of the edge of the recess (30) nearest to the junction (23) of the oppositely-inclined faces (21, 22).

1/7

FIG. I.

FIG. 2.

FIG.3.

FIG.4.

FIG. 5.

FIG. 6.

FIG. 7.

0085258

5/7

FIG. 8.

FIG. 9.

FIG. 10.

FIG. 11.

FIG. 12.

FIG. 13.

European Patent
Office

**EUROPEAN SEARCH REPORT**

Application number

EP 82 30 6977

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X,Y | US-A-3 154 061 (CITROEN)<br><br>* Column 1, line 10 - column 2, line 32; line 53 - column 4, line 16; figures 1-5 *<br><br>--- | 1-6,8-10 | F 02 B 23/08 |
| X | US-A-2 282 435 (ROVER)<br>* page 1, left-hand column, lines 27-41; right-hand column, lines 9-28; figures 1,2 *<br><br>--- | 8 | |
| Y | GB-A-1 575 938 (AUGUST)<br>* Page 1, line 85 - page 2, line 11; figures 1-4 *<br><br>--- | 9,10 | |
| A | US-A-2 214 941 (TAUB)<br>* Page 1, right-hand column, line 49 - page 2, left-hand column, line 9; right-hand column, line 69 - page 3 left-hand column, line 10; figures 1,3,3A,3B *<br><br>----- | 7 | TECHNICAL FIELDS SEARCHED (Int. Cl. ³)<br><br>F 02 B |

The present search report has been drawn up for all claims

| Place of search | Date of completion of the search | Examiner |
|---|---|---|
| THE HAGUE | 14-03-1983 | KOOIJMAN F.G.M. |